# EUROPEAN PATENT SPECIFICATION

(11) **EP 3 557 818 B1**
(45) Date of publication and mention of the grant of the patent: **05.05.2021**
(21) Application number: 18736305.6
(22) Date of filing: 05.01.2018
(51) Int. Cl.: H04L 12/24

(54) **METHOD, DEVICE AND SYSTEM FOR MANAGING NETWORK SLICE INSTANCE**
VERFAHREN, VORRICHTUNG UND SYSTEM ZUR VERWALTUNG EINER NETZWERK-SLICE-INSTANZ
PROCÉDÉ, DISPOSITIF ET SYSTÈME DE GESTION D'INSTANCE DE TRANCHE DE RÉSEAU

(30) Priority: 05.01.2017 CN 201710008587
(43) Date of publication of application: 23.10.2019
(73) Proprietor: Huawei Technologies Co., Ltd., Longgang District Shenzhen, Guangdong 518129 (CN)
(72) Inventor: SUN, Wenqi, Shenzhen Guangdong 518129 (CN); YANG, Shuigen, Shenzhen Guangdong 518129 (CN); LU, Wei, Shenzhen Guangdong 518129 (CN)
(74) Representative: Maiwald Patent- und Rechtsanwaltsgesellschaft mbH
(86) International application number: PCT/CN2018/071620
(87) International publication number: WO 2018/127144

(56) References cited:
- WO-A1-2016/192636
- CN-A- 105 813 195
- CN-A- 106 060 900
- CN-A- 106 210 042
- US-A1- 2016 353 367
- HUAWEI: "Adding usecase and requirements for E2E Network Slice creation supporting end user services", 3GPP DRAFT; S5-166150 PCR TR 28.801 ADDING USE CASE AND REQUIREMENTS FOR E2E NETWORK SLICE CREATION SUPPORTING END USER SERVICES, 3RD GENERATION PARTNERSHIP PROJECT (3GPP), MOBILE COMPETENCE CENTRE ; , vol. SA WG5, no. Reno (US); 20161114 - 20161118 13 November 2016 (2016-11-13), XP051187522, Retrieved from the Internet: URL:http://www.3gpp.org/ftp//Meetings_3GPP _SYNC/SA5/Docs/ [retrieved on 2016-11-13]
- KDDI ET AL: "D2.1 - Use Case Scenarios, and Technical System Requirements Definition - ver. 1.1", ITU-T DRAFT; STUDY PERIOD 2013-2016; FOCUS GROUP IMT-2020, INTERNATIONAL TELECOMMUNICATION UNION, GENEVA ; CH , vol. imt-2020 8 December 2016 (2016-12-08), pages 1-106, XP044242569, Retrieved from the Internet: URL:https://extranet.itu.int/ITU-T/focusgr oups/imt-2020/Workspace/5G!Pagoda - D2.1 - Use case scenarios and technical system equirements definition - v.1.1_TB.pdf [retrieved on 2016-12-08]
- "3rd Generation Partnership Project; Technical Specification Group Services and System Aspects; Telecommunication management; Study on management and orchestration of network slicing for next generation network (Release 14)", 3GPP DRAFT; S5-166455-RM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 14 December 2016 (2016-12-14), XP051205839, Retrieved from the Internet: URL:http://www.3gpp.org/ftp/tsg_sa/WG5_TM/ TSGS5_110/Docs/ [retrieved on 2016-12-14]
- DRAFTING EDITOR (NOKIA) ET AL: "Interim Agreements based on Way forward on Solutions for Key Issue 1 on Network Slicing", 3GPP DRAFT; S2-166097-NETSLICING_PROPOSED AGREEMENTS-MERGED- REVISION 3 UPDATED DURING TUE NG SESSION, 3RD GENERATION PARTNERSHIP PROJECT (3GPP), MOBILE COMPETENCE CENTRE ; 650, ROUTE DES LUCIOLES ; F , vol. SA WG2, no. Kaohsiung, Taiwan; 20161017 - 20161021 24 October 2016 (2016-10-24), XP051170058, Retrieved from the Internet: URL:http://www.3gpp.org/ftp/tsg_sa/WG2_Arc h/TSGS2_117_Kaohsiung_City/Docs/ [retrieved on 2016-10-24]
- ZTE: "Network Slice Selection Procedure", 3GPP DRAFT; R3-161107 NETWORK SLICE SELECTION PROCEDURE V4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Nanjing, China; 20160523 - 20160527 22 May 2016 (2016-05-22), XP051105915, Retrieved from the Internet: URL:http://www.3gpp.org/ftp/Meetings_3GPP_ SYNC/RAN3/Docs/ [retrieved on 2016-05-22]

## Description

### TECHNICAL FIELD

This application relates to the communications field, and in particular, to a network slice instance management method, an apparatus, and a computer program product.

### BACKGROUND

With rapid development of mobile communications, diversified service requirements need to be met in a future mobile communications system, such as enhanced mobile broadband, massive machine type communications, and ultra-reliable and low latency communications. Therefore, a concept of network slicing is proposed in a next-generation mobile communications system. A network slicing technology logically abstracts a network as one or more network slices, each network slice includes a series of logical network functions, and one network slice may meet a type of connection communication service requirement or a connection communication service requirement in one case. The next-generation mobile communications system may include a large quantity of network slices that meet different connection capabilities.

A network slice is implemented in a form of a network slice instance in a network. A complete network slice instance may include a plurality of components, and each component is created in each management domain. For example, a complete network slice instance in a PLMN network may include a RAN side network slice instance and a CN side network slice instance. How to associate the components is a current problem to be resolved.

In Huawei: "Adding use case and requirements for E2E network slice creation supporting and user services", 3GPP DRAFT; S5-166150 PCR TR 28.801, Mobile competence center; vol. SA WG5, no. Reno (US), 20161114-20161118, 13 November 2016, an operator determines if reusing an existing network slice instance or creating a new network slice instance for the end user service based on the service requirement. If an existing network slice instance can be reused, the operator may reconfigure the existing network slice instance to meet the service instance. If no existing network slice instance is available, the operator will determine to create a new network slice instance with the following steps. The operator allocates a network slice instance identifier for the network slice instance to be created. The operator decomposes the special service requirements into CN part-related requirements and RAN part-related requirements. For the CN part-related requirements, the operator creates a CN SubNet instance or reuses an existing CN SubNet instance and associates it with corresponding network slice instance. For the RAN part-related requirements, the operator creates RAN NEs or reusing existing RAN NEs and associates them with corresponding network slice instance.

KDDI et al: "D2.1 - Use case scenarios, and technical system requirements definition - ver. 1.1", ITU-T DRAFT; study period 2013-2016; focus group IMT-2020, International telecommunication union, Geneva; CH, vol. imt-2020 8 December 2016, pages 1-106, provides the identified reference scenarios, use cases, technical system requirements and overall architecture guidelines for 5GIPagoda.

"3rd Generation Partnership Project; Technical Specification Group Services and System Aspects; Telecommunication management; Study on management and orchestration of network slicing for next generation network (Release 14)", 3GPP DRAFT; S5-66455-RM, Mobile competence centre; 650, Route des Lucioles; F-06921 Sophia Antipolis Cedex; France, 14 December 2016, specifies use cases for management of network slicing, potential requirements, potential solutions and recommendations.

WO 2016/192636 A1 describes a method for management of network slices in a communication network. The method provides virtualized functions in control and data planes, and operates a communication network having network slices.

### SUMMARY

The invention is defined by the appended claims. Embodiments and examples not covered by the claims are meant to illustrate, and facilitate the understanding of, the claimed invention.

Embodiments of this application provide a network slice instance management method and an apparatus, so as to manage a network slice instance and the like.

According to a first aspect, a network slice instance management method is provided, as claimed in independent Claim 1.

According to the method, at least two network slice instance subnets may be associated, to constitute a complete network slice instance for subsequent transmission. A plurality of network slice instance subnets are respectively corresponding to a plurality of network elements. Different network elements may be connected to each other by associating the network slice instance subnets.

In a possible design, the network manager is a network slice manager and orchestrator, NSM&O, module, the first element manager is a RAN manager, the first network slice instance subnet is a RAN slice instance, the second element manager is a CN manager, and the second network slice instance subnet is a CN slice instance.

In a possible design, when the CN manager manages a plurality of network slice instance subnets, and the CN slice instance includes at least two network slice instance subnets, the network slice instance management method further includes: sending, by the NSM&O module, a second configuration request to the RAN manager, where the second configuration request is used to associate the at least two network slice instance subnets.

In another possible design, the network slice management method further includes: sending, by the NSM&O, a creation request to the RAN manager, where the creation request is used to create the RAN network slice instance, and includes a creation parameter; and
receiving a creation acknowledgment message sent by the RAN manager, where the creation acknowledgment message indicates that creation of the RAN network slice instance is completed.

In still another possible design, the network slice management method further includes: sending, by the NSM&O, a query message to the RAN manager, where the query message is used to obtain information about a resource of a network slice instance on a RAN node managed by the RAN manager; and
receiving a resource feedback message from the RAN manager to perform resource configuration, and generating and sending a resource adjustment message, where the resource adjustment message is used to adjust the resource on the RAN node managed by the RAN manager.

Another aspect of this application provides a network manager, including:
a communications interface;
a memory, configured to store an instruction; and
a processor, separately connected to the memory and a transceiver, and configured to execute the instruction stored in the memory, to perform the network slice instance management method when executing the instruction.

Still another aspect of this application provides a computer-readable storage medium, where the computer-readable storage medium stores an instruction, and when the instruction is run on a computer, the computer performs the methods in the foregoing aspects.

Still another aspect of this application provides a computer program product that includes an instruction, and when the instruction is run on a computer, the computer performs the methods in the foregoing aspects.

According to the network slice management method provided in the embodiments of this application, network slice subnet instances corresponding to a plurality of element managers managed by a same network manager may be associated, so as to constitute a complete end-to-end network slice instance.

### DESCRIPTION OF DRAWINGS

FIG. 1A is a schematic diagram of a network management architecture according to an embodiment of this application;
FIG. 1B is a schematic diagram of another network management architecture according to an embodiment of this application;
FIG. 2 is a schematic diagram of a network slice instance according to an embodiment of this application;
FIG. 3 is a schematic diagram of another network slice instance according to an embodiment of this application;
FIG. 4 is a structural diagram of a network manager according to an embodiment of this application;
FIG. 5 is a schematic interaction diagram of a network management method according to an embodiment of this application;
FIG. 6 is a simplified schematic diagram of a network management architecture according to an embodiment of this application;
FIG. 7 is a schematic interaction diagram of another network management method according to an embodiment of this application;
FIG. 8 is a schematic interaction diagram of another network management method according to an embodiment of this application;
FIG. 9 is a schematic interaction diagram of another network management method according to an embodiment of this application;
FIG. 10 is a schematic block diagram of a network manager according to an embodiment of this application; and
FIG. 11 is a schematic structural diagram of a network manager according to an embodiment of this application.

### DESCRIPTION OF EMBODIMENTS

The following describes the technical solutions in the embodiments of this application with reference to the accompanying drawings in the embodiments of this application.

In this application, the word "example" is used to represent giving an example, an illustration, or a description. Any embodiment described as an "example" in this application should not be explained as being more preferred or having more advantages than another embodiment. To enable any person skilled in the art to implement and use this application, the following description is provided. In the following description, details are set forth for the purpose of explanation. It should be understood that a person of ordinary skill in the art may learn that this application can be implemented without these specific details. In other examples, well-known structures and processes are not described in detail to avoid obscuring the description of this application with unnecessary detail. Therefore, this application is not limited to the shown embodiments but is consistent with a maximum scope of principles and features disclosed in this application.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way is interchangeable in proper circumstances so that the embodiments of this application described herein can be implemented in orders except the order illustrated or described herein. Moreover, the terms "include", "contain" and any other variants are intended to cover non-exclusive inclusion, for example, a process, method, system, product, or device that includes a list of steps or units is not necessarily limited to those steps or units that are expressly listed, but may include other steps or units not expressly listed or inherent to such a process, method, product, or device.

The terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

Specific embodiments are used below to describe in detail the technical solutions of this application. The following several specific embodiments may be combined with each other, and a same or similar concept or process may not be described repeatedly in some embodiments.

That a 5G network may be divided into a plurality of network slices is a key 5G feature. One network slice, NS, corresponds to one logical network, and the logical network is used to meet a communication service requirement in one case. One network slice includes one or more network functions, NF, and is implemented by using a network slice instance, NSI, in other words, a network function of a network slice and a corresponding resource and configuration are instantiated to constitute one network slice. One network slice may include one or more network slice instances, and different network slice instances may have different network functions and/or resource configurations. Performance management of a network slice instance is one of key technologies for ensuring normal running of the 5G network.

A network slicing technology abstracts, based on a scenario requirement, a physical infrastructure resource in the 5G network as a plurality of parallel network slice instances that are independent of each other. In each network slice instance, based on a requirement of a service scenario and a service model, a network function is customized and a corresponding network function is orchestrated and managed. One network slice instance may be considered as one instantiated 5G network. In such a network structure, an operator can provide a network for a user as a service, and can freely combine entity networks based on indicators such as a speed, a capacity, coverage, a latency, reliability, security, and availability, to meet requirements of different users.

It should be noted that the terms "network management architecture", "network system", "system" and the like in this specification may be replaced with each other, the terms "network slice instance", "slice instance", "instance" and the like in this specification may be interchangeable, and the terms "network slice instance subnet", "subnet instance", "subnet", and the like in this specification may be interchangeable. For ease of understanding, some terms in this specification are described first.

A network slice is a particular logical network that is customized based on a particular service requirement on a physical or virtual network infrastructure. The network slice may be a complete end-to-end network that includes a terminal, an access network, a transmission network, a core network, and an application server, can provide a telecommunications service, and has a network capability. The network slice may also be any combination of the foregoing terminal, access network, transmission network, core network, and application server, for example, the network slice includes only the access network and the core network. The network slice may have one or more of the following characteristics: The access network may be sliced, or may not be sliced. The access network may be shared by a plurality of network slices. Different network slices have different characteristics and different network functions that constitute the different network slices.

A network slice instance NSI, is a really operating logical network, and can meet a network characteristic or a service requirement. One network slice instance may provide one or more services. The network slice instance may be created by a network management system. One network management system may create and manage a plurality of network slice instances, including performing performance monitoring, fault management, and the like in a running process of the network slice instances. When a plurality of network slice instances coexist, some network resources and network functions may be shared by the network slice instances. The network slice instances may be created from a network slice template, or may not be created from a network slice template.

A complete network slice instance is a complete logical network within a range (for example, a PLMN CN and a RAN), and the network slice instance may alternatively include a network slice instance subnet and/or a network function. The network slice instance subnet ("subnet instance" for short below) may not be a complete logical network. The network slice instance subnet ("subnet instance" for short below) may not need to provide a complete end-to-end network service. The network slice instance subnet may be a set of network functions of a same equipment vendor in the network slice instance, or may be a set of network functions that are classified based on a field, for example, a core network slice instance subnet and an access network slice instance subnet. The network slice instance subnet may be shared by a plurality of network slice instances. The network slice instance subnet is proposed for convenience of management of a network management system. One network slice instance may include several network slice instance subnets, and each network slice instance subnet includes several network functions. One network slice instance may include several network slice instance subnets and a network function that is not classified as a network slice instance subnet. One network slice instance may alternatively include only several network functions. The network function may include a physical network function and/or a virtual network function. The physical network function and/or the virtual network function are/is collectively referred to as a network function.

Optionally, one network slice instance may provide a plurality of services at the same time. For example, an operator uses a network slice instance to provide a water meter reading service for a water company, and to provide an electric meter reading service for an electric power company. Management data of different services can be isolated if there is a requirement, including performance data, fault information, and the like. When one network slice instance provides a plurality of services, a network management system may allocate an identifier to each served instance, and enable a network function and/or a network slice instance subnet of the network slice instance to sense each served instance.

A network slice template is a manner of generating a network slice instance, and is used to provide a reference for generating the network slice instance. The network slice template specifies how the network slice instance should be generated. For example, the network slice template may indicate that a network slice includes which network function and should meet which key performance indicator, KPI.

A network function is a processing function in a network, and defines a functional behavior and interface. The network function may be implemented by using dedicated hardware, or may be implemented by running software on dedicated hardware, or may be implemented in a form of a virtual function on a common hardware platform. Therefore, from a perspective of implementation, the network function may be divided into a physical network function and a virtual network function. However, from a perspective of use, the network function may be divided into a dedicated network function and a shared network function. Specifically, a plurality of network slice instances may independently use different network functions, where these network functions are referred to as dedicated network functions, or may share a same network function, where the network function is referred to as a shared network function.

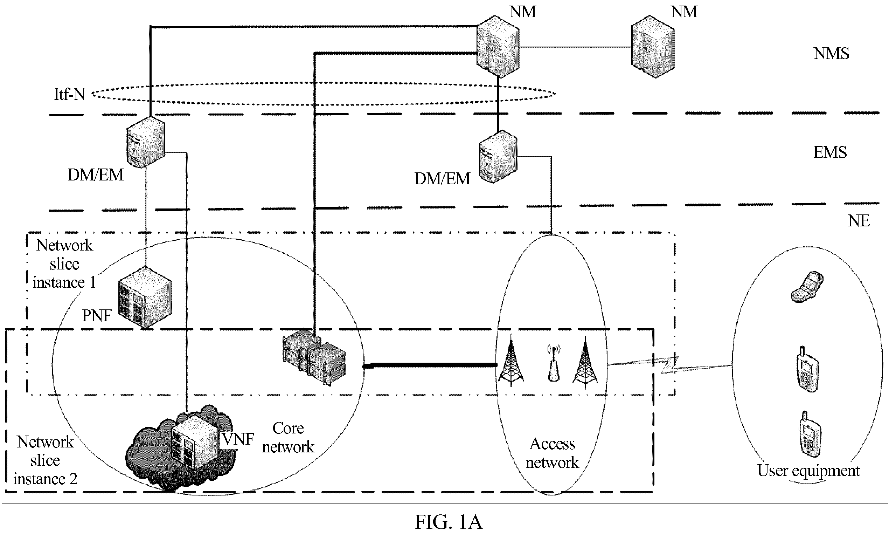

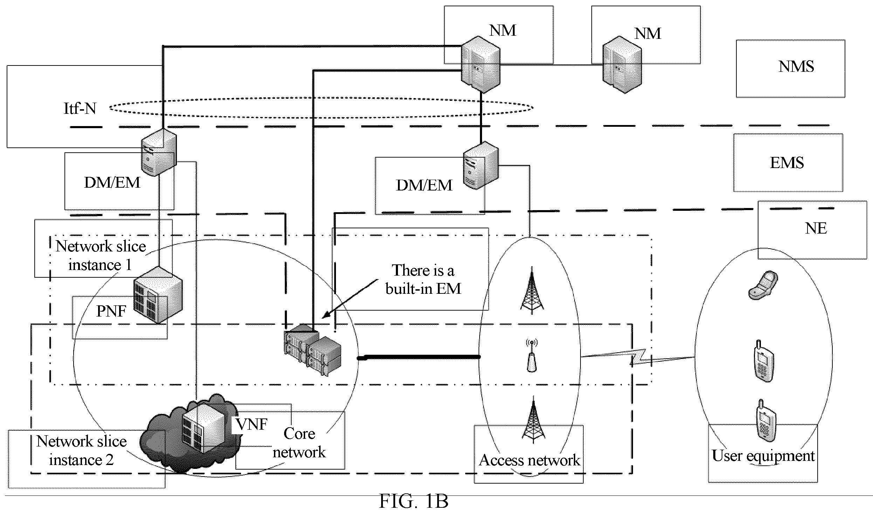

To facilitate understanding of the embodiments of this application, a network management architecture in FIG. 1 is first described. FIG. 1 shows the network management architecture 100. The network management architecture 100 includes three layers: a network management system, NMS, an element management system, EMS, and a network element, NE. There is an interface between the EMS and the NE, so that the EMS and the NE can communicate with each other. There is an interface between the EMS and the NMS, so that the EMS and the NMS can communicate with each other. The interface between the EMS and the NMS may be an Itf-N interface. Certainly, the interface may also have another name.

The NMS may include one or more network managers. The NMS mainly provides a network management function, and may manage networks of different regions or different device suppliers. A network administrator may comprehensively monitor the network by using the NMS. The NMS may provide a basic network management function, for example, fault management, configuration management, accounting management, performance management, and security management.

The EMS may include an element manager, EM, and/or a, DM. The EM is a network module configured to manage a network element, and may be disposed on the network element, or may be disposed independently. The DM is a management system module whose management range level is one level higher than that of the EM. The DM may manage one or more EMs. For example, the DM may be a management system of a vendor. It should be noted that the EM and the DM are different in definition. The EM directly manages a same type of network devices, for example, the EM manages a series of base stations. The DM manages a network device belonging to a vendor, and provides a domain management function. A management range of the DM is larger than that of the EM. Usually, an EM device is configured to perform configuration of a network function. However, in this embodiment of this application, a possibility that the DM executes a procedure executed by the EM is not excluded. The EM may be independently disposed, and FIG. 1A shows this case. Alternatively, the EM may be disposed on an NE, and FIG. 1B shows this case. Introduction of a network slicing technology enables the EMS to support a network slice, for example, can sense an identifier of a network slice instance. Introduction of a network function enables the EMS to manage a network function.

The NE is a network element in a conventional 3GPP network management architecture, and may be an access network device or a core network device. For example, the NE may be a base station, a mobility management entity, MME, or a serving gateway, SGW. In a 5G network, a managed object at the management layer is a network function NF, and the NF may be a physical network function, PNF, module and/or a virtualized network function, VNF, module. The physical network function, PNF, module is a fixed network function provided by a physical device. The virtualized network function, VNF, module may be a minimum virtual unit that can perform monitoring and management in the network management architecture.

The network slice instance may include the NF. The network slice instance is created by the NMS, and one NMS may create and manage one or more network slice instances. One network slice instance may include several network slice instance subnets, and each network slice instance subnet includes several network functions. One network slice instance may alternatively include several network slice instance subnets and a network function that is not classified as a network slice instance subnet. One network slice instance may alternatively include only several network functions. A radio access network may be sliced, or may not be sliced. When the radio access network is not sliced, a network slice instance 1 and a network slice instance 2 share the radio access network. When the radio access network is sliced, the network slice instance 1 and the network slice instance 2 separately include slice instances of different radio access network parts, or share slice instances of a same radio access network part.

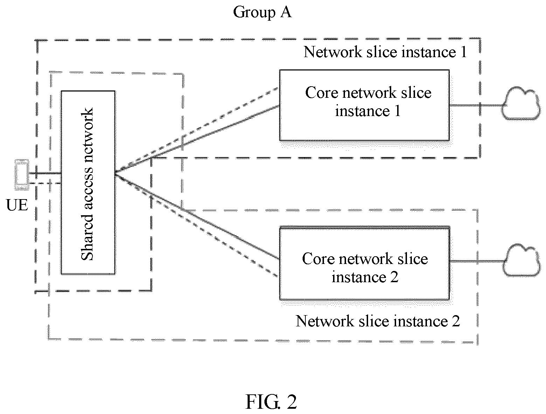

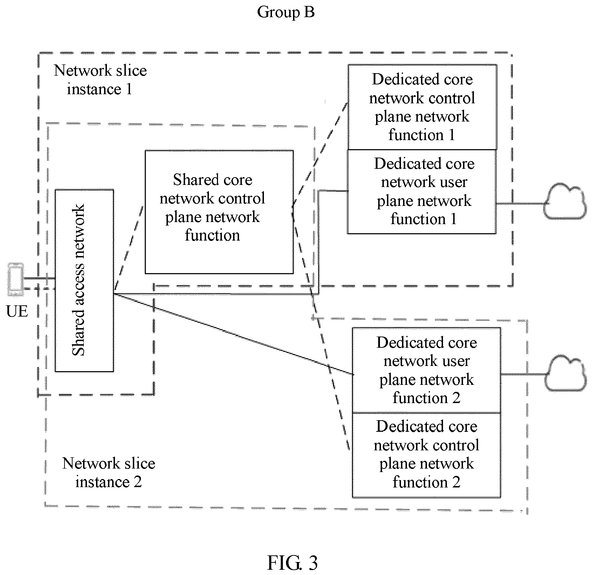

When a plurality of network slice instances coexist, the network slice instances may be completely isolated, or may share some network resources and functions. When the plurality of network slice instances coexist, two scenarios are provided: A group A and a group B are respectively shown in FIG. 2 and FIG. 3. FIG. 2 is a schematic structural block diagram of a network slice instance according to an embodiment of this application. In FIG. 2, the network slice instance 1 and the slice instance 2 share the radio access network, RAN, and the network slice instance 1 includes the radio access network and a core network slice instance 1 (which may also be referred to as a core network slice instance subnet 1). The network slice instance 2 includes the radio access network and a core network slice instance 2 (which may also be referred to as a core network slice instance subnet 2). The core network slice instance 1 and the core network slice instance 2 are logically completely isolated. FIG. 3 is a schematic structural block diagram of a network slice instance according to another embodiment of this application. In FIG. 3, there are some shared control plane functions between the core network slice instance 1 and the core network slice instance 2, and the shared control plane function is referred to as a Common Control Plane Network Function, common CP NF or CCNF for short. Each network slice instance further has a Slice-specific Control Plane Network Function, slice-specific CP NF, and a Slice-specific User Plane Network Function, slice-specific UP NF. The network slice instance 1 includes the radio access network, the shared core network control plane network function, a dedicated core network control plane network function 1, and a dedicated core network user plane network function 1. The network slice instance 2 includes the radio access network, the shared core network control plane network function, a dedicated core network control plane network function 2, and a dedicated core network user plane network function 2. It should be noted that the radio access network may also be sliced, and the radio access network may include network slice instances of an access network that are logically completely isolated, or there may be some shared network functions between network slice instances of the radio access network. In addition, when the radio access network includes the network slice instances of the access network that are logically completely isolated, a core network may include core network slice instances that are logically completely isolated, or there may be some shared network functions between core network slice instances. When there are some shared network functions between the network slice instances of the radio access network, the core network may include the core network slice instances that are logically completely isolated, or there may be some shared network functions between the core network slice instances.

Based on the network management architecture 100 in this embodiment of this application, a network slice manager and orchestrator, NSM&O, module is introduced into the NMS, so as to implement a management function and an orchestration function of a network slice. The NSM&O module may be disposed on an NM, or may be disposed independently.

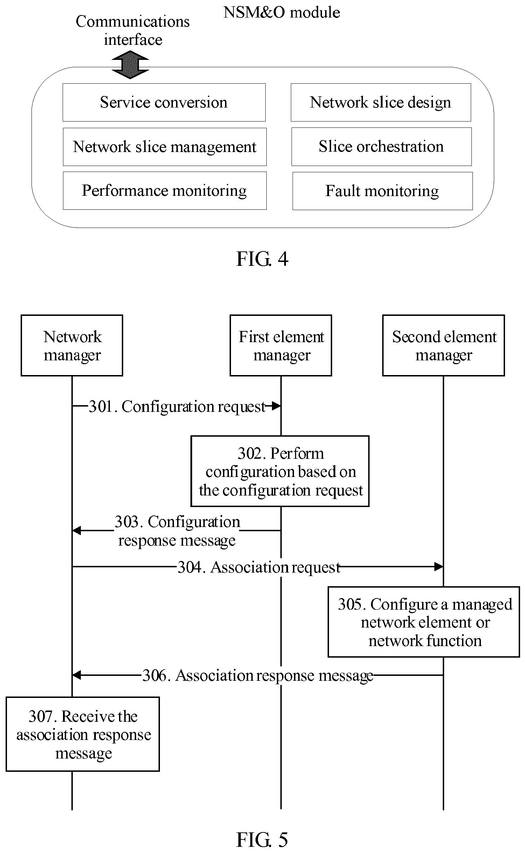

A schematic structural diagram of the NSM&O module is shown in FIG. 4, and main functions of the NSM&O module include service conversion, network slice design, network slice management, network slice orchestration, performance monitoring, fault monitoring, and the like. For detailed descriptions of the foregoing main functions, refer to the following.

The service conversion is used to receive, through an interface, for example, an application programming interface, API, service description information that is sent by a transmit end device, and convert the service description information into a requirement on a network.

The network slice design is used to describe composition of a network slice based on a result of service conversion, for example, may be designing a Network Slice Descriptor, NSLD.

The network slice management is used to manage a lifecycle of a network slice according to a designed policy, for example, may be instantiating a network slice, scaling a network slice instance, updating a network slice instance, terminating a network slice instance, or deleting a network slice.

The network slice orchestration is used to specifically determine a network function included in a network slice instance and a network source used by the network slice instance.

The performance monitoring is used to monitor performance data of a network slice instance.

The fault monitoring is used to monitor a fault occurring in a network slice instance.

The foregoing transmit end device is a device that sends a request to the NSM&O module. For example, the transmit end device may be an operator, a third-party customer, an application related to a communication service, or any other entity device that may send the request to the NSM&O.

Based on the RAN network slice instance and the CN network slice instance, the foregoing describes the network management architecture in this embodiment of this application with reference to FIG. 1 and FIG. 2. With reference to the accompanying drawings, the following describes a network slice instance management method in this embodiment of this application. The network slice instance management method may be applied to a network management system, the network management system may include one or more network managers, and an element management system may include one or more element managers. As mentioned above, a complete network slice instance can provide a complete end-to-end network service. The network slice instance may include several network slice instance subnets, or may include a network slice instance subnet and a network function. The network slice instance management method provided in this embodiment of this application is used to establish an association between network slice instance subnets, an association between a network slice instance subnet and a network function, or an association between network functions. Alternatively, the method may be further applied to another network management architecture. This is not limited in this embodiment of this application.

In some application scenarios, a complete network slice instance includes more than one network slice instance subnet, and at least two network slice instance subnets need to be associated, so that network slice instance subnets can be connected to each other, and sense that the network slice instance subnets serve a same complete network slice instance, to constitute the complete network slice instance.

In an embodiment of this application, the network slice instance management method is used to associate a first network slice instance subnet with a second network slice instance subnet, so as to constitute a complete network slice instance. Each network slice instance subnet is managed by one or more element managers. Specifically, when configuration of an aspect is performed on the network slice instance subnet, a configuration request is sent to an element manager. Referring to FIG. 5, the network slice instance management method includes the following steps.

301. A network manager sends a configuration request to a first element manager.

The configuration request is used to configure a first network slice instance subnet based on a second subnet instance and a requirement of a complete network slice instance, and the first configuration request includes description information of the to-be-associated second network slice instance subnet, description information of a to-be-created network slice instance, and configuration description information of the first subnet slice instance subnet.

302. The first element manager receives the configuration request from the network manager, and correspondingly configures a first network slice instance subnet based on the configuration request.

Specifically, when receiving the configuration request, the first element manager configures, based on the description information of the second network slice instance subnet, the description information of the to-be-created network slice instance, and the description information of the first subnet slice instance subnet in the configuration request, a network element or a network function managed by the first element manager, so that the first network slice instance subnet obtains information about the second network slice instance subnet and information about the to-be-created network slice instance, and configures a related parameter based on the configuration description information of the first subnet instance subnet.

303. The first element manager sends a configuration response message to the network manager.

The configuration response message is used to indicate, to the network manager, that the first element manager completes configuration of the first network slice instance subnet.

304. The network manager sends an association request to a second element manager.

The association request is used to request the second element manager to associate with the second network slice instance subnet, so that the second network slice instance subnet serves the to-be-created network slice instance subnet, and the association request includes at least the description information of the to-be-created network slice instance.

305. The second element manager receives the association request, and configures, in response to the association request, a network element or a network function managed by the second element manager.

306. The second element manager sends an association response message to the network manager.

The association response message is used to indicate, to the network manager, that association of the second network slice instance subnet is completed, and the second network slice instance subnet has served the to-be-created network slice instance.

307. The network manager receives the association response message. In this case, a complete network slice instance is constituted.

In the following, that a network manager is an NSM&O, a first element manager is a RAN manager, and a second element manager is a CN manager is used as an example, and that a first network slice instance subnet is a RAN side network slice instance, and a second network slice instance subnet is a CN side network slice instance is used as an example. It may be considered that the CN side network slice instance has been generated, or a network slice instance subnet included in the CN side network slice instance has been generated, and whether the RAN side network slice instance has been generated is not limited. The foregoing network slice instance management method is described by using an example.

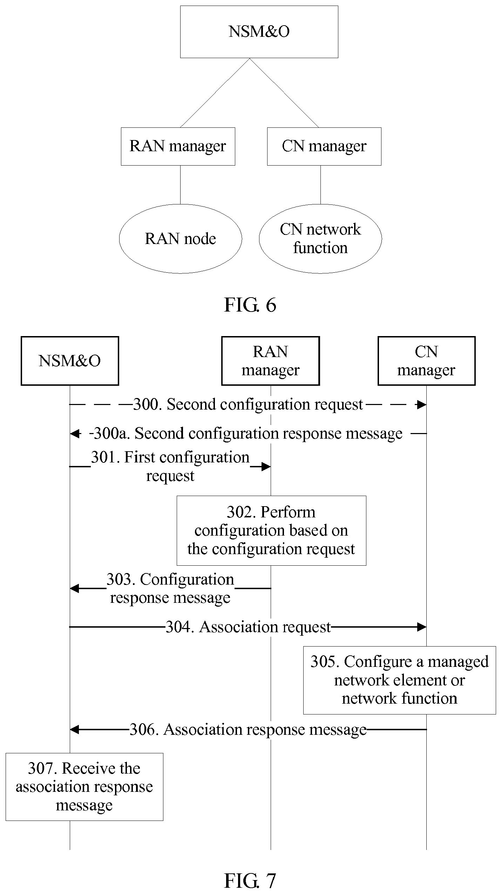

FIG. 6 is a simplified schematic diagram of a network structure under management of an NSM&O. The NSM&O manages a RAN manager and a CN manager. The RAN manager manages a plurality of RAN nodes, and the CN manager manages a plurality of CN network functions, for example, a VNF and a PNF. The RAN manager and the CN manager have a capability of managing a network slice instance subnet. The RAN manager may correspond to one or more EMs, and the CN manager may correspond to one or more EMs.

When a RAN is sliced, a complete network slice instance may be a combination of a CN side network slice instance and a RAN side network slice instance, and the CN side network slice instance needs to be associated with the RAN side network slice instance. When a RAN is not sliced, a complete network slice instance may be a combination of a CN side network slice instance and a RAN side node, and the CN side network slice instance needs to be associated with the RAN side node.

The foregoing association means that a control plane and a data plane on a CN side is respectively connected to a control plane and a data plane on a RAN side, and the RAN side and the CN side constitute one network slice instance.

Specifically, through association, the RAN side may sense that the RAN side needs to serve a complete network slice instance. Therefore, a to-be-created network slice instance identifier NSI ID and CN network slice selection assistance information, NSSAI, are sent to the RAN. The NSSAI cannot uniquely identify a slice instance. Instead, description information can reflect a characteristic of a CN slice instance to some extent. Further, through association, the CN side may sense that the CN side needs to serve a complete network slice instance, and sends the to-be-created network slice instance identifier NSI ID to the CN network slice instance.

Through association, when the RAN side receives control signaling from UE, the control signaling may be routed to a common control network function, CCNF, corresponding to the CN. The signaling may carry the NSSAI, or may not carry the NSSAI. When the control signaling carries the NSSAI, the RAN needs to store a mapping relationship between NSSAI and a CCNF, and the RAN may find a corresponding CCNF based on the mapping relationship. When the control signaling does not carry the NSSAI, the RAN needs to store a default CCNF, and the RAN may use the default CCNF.

In addition, through association, the RAN side may further know how to transmit data that belongs to the complete network slice, for example, may know a specific resource scheduling policy that is used and a specific protocol stack parameter that is configured, to ensure QoS.

A network manager needs to allocate a unique complete network slice instance identifier NSI ID, selects proper network slice instance subnets, and associates the selected network slice instance subnets, to constitute a complete network slice instance. The complete network slice instance is identified by using the NSI ID. A process of selecting the network slice instance subnets is similar to a process of selecting a RAN side slice instance based on an service level agreement, SLA, a RAN node coverage area, a RAN node resource status, and the like.

Specifically, in the foregoing step 301, the network manager may further select a CN network slice instance, to obtain description information of the selected CN network slice instance. The description information of the CN network slice instance may include a slice type, and the slice type is used to indicate a slice type of the CN network slice instance. The slice type includes but is not limited to a Critical Machine Type Communication, Critical MTC, network slice instance, a Massive Machine Type Communications, Massive MTC, network slice instance, an Enhanced Mobile Broadband, eMBB, network slice instance, and an ultra-reliable and ultra-reliable and low latency communications, URLLC, network slice instance. The slice type also implicitly includes a service that needs to be provided by the network slice instance.

Optionally, the description information of the CN network slice instance may further include one or more of the following: a slice differentiator or CCNF information.

The slice differentiator may be used to distinguish between users using a network slice instance. For example, the slice differentiator may indicate different tenants, and the foregoing tenant may be understood as an application provider or a virtual operator.

The CCNF information may be used to indicate a CCNF used by the CN network slice instance. The CCNF information may be a CCNF identifier or routing information of the CCNF.

Description information of a to-be-created network slice instance may include a complete network slice instance identifier. Specifically, the network manager needs to allocate a unique complete network slice instance identifier NSI ID, selects proper network slice instance subnets, and associates the selected network slice instance subnets, to constitute a complete network slice instance. The complete network slice instance is identified by using the NSI ID.

Configuration requirement information of a first network slice instance is used to indicate a support policy of a RAN node for the complete network slice instance. The support policy specifically includes the following three optional cases.
Case 1: When the RAN side does not support a slice, the support policy may include a QoS parameter and/or a configuration parameter configured by the RAN manager for the RAN node. For example, the QoS parameter may be specified by the SLA, for example, may be a minimum uplink rate, a minimum downlink rate, an average latency, a packet loss rate, reliability, or network availability, so that the RAN side learns of the QoS parameter. The configuration parameter of the RAN node may be, for example, a numerology configuration parameter used by the RAN node, a Media Access Control, MAC, layer configuration parameter, a Radio Link Control, RLC, layer configuration parameter, a Packet Data Convergence Protocol, PDCP, layer configuration parameter, and a radio resource management, RRM, policy configuration parameter.
Case 2: When the RAN side supports a slice, the support policy may include a slice type (RAN slice type) or an identifier (RAN slice ID) of a RAN network slice instance. The type or identifier of the RAN network slice instance corresponds to a series of default configurations on the RAN side, and the slice type or identifier of the RAN network slice instance is used to select one network slice instance subnet from a plurality of network slice instance subnets supported by the RAN side.
Case 3: A slice instance whose resources are isolated and that needs to be used is sent to the RAN manager, and specifically, a resource isolation requirement is used as an input parameter, for example, a dedicated time, a dedicated frequency, a dedicated code or other information.

In step 302, the RAN manager receives an association configuration message from the NSM&O, and correspondingly configures, based on the description information of the CN network slice instance, the information about the to-be-created network slice instance, and the description information of the first network slice instance, the RAN node managed by the RAN manager.

In step 303, the RAN manager sends a configuration response message to the NSM&O, to indicate, to the NSM&O, that the RAN manager completes configuration of a RAN network slice instance.

Specifically, the configuration response message carries a message that is used to acknowledge that a parameter sent by the NSM&O to the RAN management node in step 301 is successfully configured.

In step 304, the NSM&O sends an association request to the CN manager.

Specifically, the association request includes description information of the complete network slice instance, optionally, may include description information of the RAN slice instance. The description information of the complete network slice instance includes the complete network slice instance identifier (NSI ID), so that the CN slice instance senses that the RAN slice instance has served the complete network slice instance.

In step S305, the CN manager receives the association request from the NSM&O, obtains the information about the to-be-created network slice instance, and may correspondingly configure the CN network slice instance based on a requirement, so that the CN network slice instance can serve the to-be-created network slice instance.

In step S306, the CN manager sends an association complete message to the NSM&O, to indicate, to the NSM&O, that the CN manager completes configuration of the CN network slice instance, so that configuration of the complete network slice instance is completed.

In another possible implementation, a CN network slice instance may include a plurality of network slice subnet instances. For example, a dedicated control function of a slice is one network slice subnet instance, and CCNFs are other network slice subnet instances. One network slice instance includes a plurality of subnet slice instances, and the subnet slice instances may be shared by a plurality of network slice instances. Referring to FIG. 7, the network slice instance management method further includes the following steps.

300. The NSM&O sends a second configuration request to the CN manager, where the configuration request is used to select a plurality of network slice subnet instances.

Specifically, the NSM&O sends the configuration request to the manager corresponding to the plurality of network slice subnet instances, so as to constitute a CN network slice instance, and allocates NSSAI to the CN network slice instance. Optionally, an identifier (CN slice ID) may be further allocated to the CN side slice instance.

300a. The RAN manager sends a second configuration response message to the NSM&O, to acknowledge that construction of a network slice subnet instance including the plurality of network slice subnet instances is completed.

When the CN network slice instance includes the plurality of network slice subnet instances, in step S304, the NSM&O sends the configuration request to the manager that manages the network slice subnet instances.

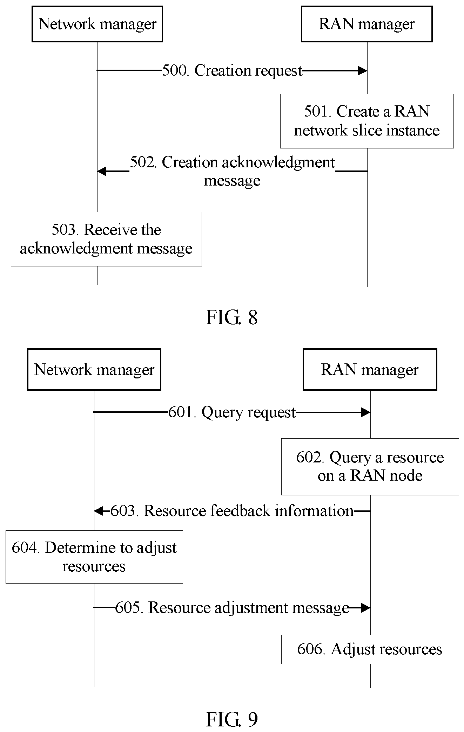

In another possible implementation, referring to FIG. 8, before step S301, the method further includes the following steps.

S500. The network manager sends a creation request to the element manager, where the creation request includes a creation parameter used to create a network slice instance.

The creation parameter may include but is not limited to a slice type, a resource parameter, a KPI parameter, and a feedback parameter. For detailed description of the parameter, refer to Table 1.

**Table 1**

| Parameter | Mandatory/Optional | Example |
|---|---|---|
| Slice type | Mandatory | eMBB 1 <High bandwidth, mid mobility> |
| | | eMBB 2 <Mid bandwidth, high mobility> |
| | | MTC <High density, low bandwidth> |
| | | URLLC 1 <High bandwidth> |
| | | URLLC 2 <Low bandwidth> |
| | | Others <Slices whose resource isolation types can be customized> |
| Resource parameter | Optional | Frequency priority list <fl, f2, ..., fn> Time-frequency resource requirement <time, frequency, bandwidth> |
| KPI parameter | Optional | <Minimum bit rate, 200Mbps> |
| | | <Quantity of MTC UEs, activation time> |
| | | <Latency, UL/DL 1-5 ms> |
| | | <Reliability, 99.999%> |
| Feedback parameter | Optional | A case in which an input resource parameter and KPI parameter are met |
| | | Identifier of the slice instance on a RAN side (RAN_Slice ID) |

The slice type parameter is a slice type supported by a RAN, or may be a group of descriptors or one number. On the RAN side, a slice type may correspond to a group of preset support manners, for example, a resource scheduling policy and a protocol stack configuration parameter. For example, the slice type parameter may include one or more of the following: an eMBB slice, an MTC slice, a URLLC slice, or another type of slice. "eMBB" is used to indicate that a slice type supported by the RAN is the eMBB slice, and the eMBB slice may be the eMBB 1, including high bandwidth (High bandwidth) and medium mobility (mid mobility), or may be the eMBB 2, including medium bandwidth (Mid bandwidth) and high reliability (High mobility). "MTC" is used to indicate that a slice type supported by the RAN is the MTC slice, including high density access (High density) and low bandwidth (low bandwidth). The URLLC 1 and the URLLC 2 are used to indicate that a slice type supported by the RAN is the URLLC slice, where the URLLC 1 includes high bandwidth (High bandwidth), and the URLLC 2 includes low bandwidth (Low bandwidth). In addition, the slices whose resource isolation types can be customized may be further limited.

The resource parameter is used to limit a time-frequency resource requirement on the RAN side. The resource parameter may be the frequency priority list, or a description of a group of time-frequency resource requirements, including time, a frequency, and bandwidth.

The KPI parameter is used to limit a KPI parameter or a range of a KPI parameter that is provided when the RAN node creates a slice. For example, the KPI parameter may include one or more of the following: a rate parameter, an MTC parameter, a latency parameter, or a reliability parameter. These parameters may include one or more elements, and elements correspond to different indicators and may have corresponding values. The rate parameter is used to indicate a rate supported by the slice instance for a service, and may include a minimum bit rate and a minimum bit rate value of 200 Mbps. The MTC parameter is used to indicate how to support an MTC service, and may include a quantity of UEs and an activation time. The latency parameter is used to indicate latency assurance of a service, and may include a latency and an uplink or downlink (UL/DL) latency value of 1-5 ms. The reliability parameter is used to indicate reliability assurance of a service, and may include reliability and a reliability value of 99.999%.

The feedback parameter is a related parameter used to indicate that the RAN manager needs to perform feedback after creation of a network slice instance is completed in a network management system. For example, the feedback parameter may include one or more of the following: a parameter used to acknowledge a creation result or an ID of a RAN network slice instance.

The foregoing several parameters are merely examples. This embodiment of this application is not limited to only configuration of the foregoing parameters, and a created input parameter may further include another parameter.

S501. The RAN manager receives a creation parameter sent by the network manager, and creates the network slice instance based on the creation parameter.

Specifically, the RAN manager checks a resource occupation status based on the creation parameter, and creates the RAN network slice instance with reference to the input parameter.

S502. The RAN manager sends a creation acknowledgment message to the network manager, to indicate, to the network manager, that creation of the RAN network slice instance is completed.

When the received creation parameter includes the feedback parameter, the RAN manager sends the corresponding parameter by using a network slice instance acknowledgement message based on the indication in the feedback parameter.

S503. The network manager receives a network slice instance acknowledgement message, to acknowledge that creation of the RAN side network instance is completed.

Therefore, according to the network slice management method provided in this application, the RAN network slice instance may be further created, and the created RAN network slice instance is associated with the CN network slice instance, so as to constitute a complete network slice instance, and implement customized management.

In still another implementation, before a RAN network slice instance is associated with, the network manager first determines whether resources of the to-be-associated RAN network slice instance can meet a requirement. When the resources are insufficient, the network manager may further increase the resources of the to-be-associated RAN network slice instance. Referring to FIG. 9, the network slice instance management method further includes the following steps.

601. The network manager sends a query message to the RAN manager, where the query message is used to obtain information about a resource on a RAN node managed by the RAN manager.

602. The RAN manager receives the query message, and queries the resource on the managed RAN node in response to the query message.

603. The RAN manager sends resource feedback information to the network manager, where the resource feedback information includes the resource on the RAN node. The resource on the RAN node may be a resource corresponding to a network slice instance on the RAN node.

The network manager may obtain resource statuses of a series of RAN nodes and RAN network slice instances after steps 601 to 603 are repeated. When the resources of the to-be-associated RAN network slice instance cannot meet the requirement, the network manager may perform 604 and 605, to adjust the resources. When the resources of the to-be-associated RAN network slice instance meet the requirement, step 301 is jumped to and continued to be performed.

604. The network manager receives a resource feedback message from the RAN manager, performs a management policy, and determines to adjust resources of a slice instance.

605. The network manager generates a resource adjustment message based on the resource feedback message, and sends the resource adjustment message.

The resource adjustment message is used to adjust resources of a plurality of RAN network slice instances managed by the RAN element manager. Specifically, when the resources of the to-be-associated RAN network slice instance are insufficient, the network manager may increase the resources of the to-be-associated RAN network slice instance. The network manager adds a RAN node ID and a to-be-associated RAN network slice instance ID to the resource adjustment message, to indicate that resources need to be added for the RAN network slice instance.

606. The RAN element manager receives the resource adjustment message from the network manager, and adjusts resources of a corresponding RAN network slice instance according to the resource adjustment message.

The foregoing resource adjustment may be to increase a time-frequency resource, or improve a QoS parameter requirement. The network manager may adjust the resources of the to-be-associated RAN network slice instance by adjusting resources of another subnet slice instance managed by the RAN element manager. For example, the network manager reduces the resources of the another subnet slice instance, and allocates, to the to-be-associated RAN network slice instance, a resource that is subtracted from the resources, to increase the resources. In this case, the network manager adds, to the resource adjustment message, an ID of a RAN node whose resource needs to be reduced and an ID of a RAN network slice instance whose resource needs to be reduced.

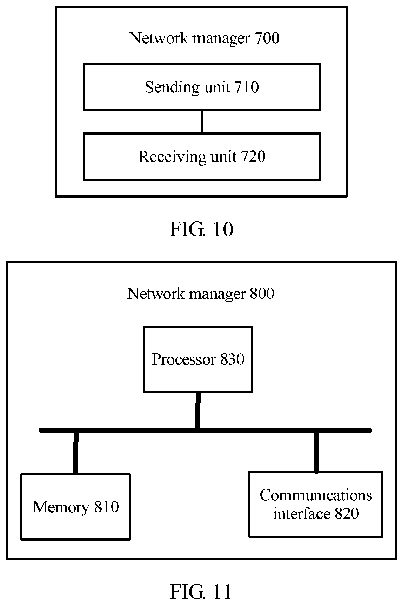

The foregoing describes in detail a network management method and a network management architecture according to the embodiments of this application with reference to FIG. 1A to FIG. 6. The following describes in detail a network management apparatus according to the embodiments of this application with reference to FIG. 10 to FIG. 11.

FIG. 10 is a schematic block diagram of a network management apparatus 700. It should be understood that the network management apparatus 700 can perform the steps performed by the network manager in the methods in FIG. 5 to FIG. 9. To avoid repetition, details are not described herein again. The network manager 700 includes a sending unit 710 and a receiving unit 720 that are connected to each other.

The sending unit 710 is configured to send a first configuration request to a first element manager. The first configuration request includes one or more of the following: description information of a second network slice subnet instance, description information of a network slice instance, or description information of a first network slice subnet instance.

The receiving unit 720 is configured to receive a configuration response message sent by the first element manager. The sending unit 710 is configured to send an association request to the first element manager, where the association request includes the description information of the network slice instance. The receiving unit 720 is further configured to receive an association response message sent by a second element manager.

In the following, that the first element manager is a RAN manager, the second element manager is a CN manager, the first network slice subnet instance is a RAN slice instance, and the second network slice subnet instance is a CN slice instance is used as an example for a further description.

The sending unit 710 is further configured to send a creation request to the RAN manager, where the creation request includes a creation parameter used to create the RAN slice instance. The creation parameter includes but is not limited to a slice type, a resource parameter, a KPI parameter, and a feedback parameter.

The receiving unit 720 is further configured to receive a network slice instance acknowledgement message from the RAN manager, so as to complete creation of the RAN slice instance.

In still another implementation, before a RAN network slice instance is associated with, the network manager first determines whether resources of the to-be-associated RAN network slice instance can meet a requirement. When the resources are insufficient, the network manager may further increase the resources of the to-be-associated RAN network slice instance.

The sending unit 710 is further configured to send a query message to the RAN manager. The query message is used to obtain information about a resource on a RAN node managed by the RAN manager.

The receiving unit 720 is further configured to: receive a resource feedback message from the RAN manager to perform resource configuration, and generate a resource adjustment message. The sending unit 710 is further configured to send the resource adjustment message.

FIG. 11 is a schematic block diagram of a network manager according to an embodiment of this application. It should be understood that the network manager can perform the steps performed by the network manager in the methods in FIG. 5 to FIG. 9. To avoid repetition, details are not described herein again. The network manager includes a communications interface 820, a memory 810, and a processor 830. The memory 810 is configured to store an instruction.

The processor 830 is separately connected to the memory 810 and the communications interface 820, and is configured to execute the instruction stored in the memory 810, so as to perform the following step when executing the instruction: sending a first configuration request to a first element manager through the communications interface 820. The first configuration request includes description information of a second network slice subnet instance, description information of a network slice instance, and description information of a first network slice subnet instance.

The processor 830 further performs the following steps when executing the instruction: receiving, through the communications interface 820, a configuration response message sent by the first element manager; sending an association request to the first element manager through the communications interface 820; and receiving an association response message sent by a second element manager. The association request includes the description information of the network slice instance.

In the following, that the first element manager is a RAN manager, the second element manager is a CN manager, the first network slice subnet instance is a RAN slice instance, and the second network slice subnet instance is a CN slice instance is used as an example for a further description.

The processor 830 further performs the following step when executing the instruction: sending a creation request to the RAN manager through the communications interface 820, where the creation request includes a creation parameter used to create the RAN slice instance. The creation parameter includes but is not limited to a slice type, a resource parameter, a KPI parameter, and a feedback parameter. The processor 830 receives a network slice instance acknowledgement message from the RAN manager through the communications interface 820, so as to complete creation of the RAN slice instance.

In still another implementation, before a RAN network slice instance is associated with, the network manager first determines whether resources of the to-be-associated RAN network slice instance can meet a requirement. When the resources are insufficient, the network manager may further increase the resources of the to-be-associated RAN network slice instance.

The processor 830 further performs the following step when executing the instruction: sending a query message to the RAN manager through the communications interface 820. The query message is used to obtain information about a resource on a RAN node managed by the RAN manager. The processor 830 receives, through the communications interface 820, a resource feedback message from the RAN manager to perform resource configuration, and generates and sends a resource adjustment message.

It should be understood that sequence numbers of the foregoing processes do not mean execution sequences in various embodiments of this application. The execution sequences of the processes should be determined based on functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps can be implemented by electronic hardware, computer software, or a combination thereof. To clearly describe the interchangeability between the hardware and the software, the foregoing has generally described compositions and steps of each example based on functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments in this application.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

All or some of the foregoing embodiments may be implemented through software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line, DSL,) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk, SSD), or the like.

It may be understood that, for brevity and clarity of the application document, technical features and descriptions in one of the foregoing embodiments are applicable to other embodiments, and are no longer described in detail one by one in the other embodiments.

The protection scope of this application shall be subject to the protection scope of the claims.

## Claims

1. A network slice instance management method for associating at least two network slice instance subnets to constitute a to-be-created network slice instance, comprising:
sending (301), by a network manager, a first configuration request to a first element manager, wherein the first configuration request is used to configure a first network slice instance subnet based on a second network slice instance subnet and a requirement of a to-be-created network slice instance, and wherein the first configuration request comprises: description information of the second network slice instance subnet, description information of the to-be-created network slice instance, and configuration description information of the first network slice instance subnet;
receiving (303), by the network manager, a configuration response message sent by the first element manager, wherein the configuration response message is used to indicate, to the network manager, that the first element manager completes configuration of the first network slice instance subnet;
sending (304), by the network manager, an association request to a second element manager, wherein the association request is used to request the second element manager to associate with the second network slice instance subnet, and wherein the association request comprises the description information of the to-be-created network slice instance; and
receiving (307), by the network manager, an association response message sent by the second element manager, wherein the association response message is used to indicate that the association of the second network slice instance subnet is completed and that the second network slice instance subnet can serve the to-be-created network slice instance.

2. The method according to claim 1, wherein the network manager is a network slice manager and orchestrator, NSM&O, the first element manager is a radio access network RAN manager, the first network slice instance subnet is a RAN slice instance, and the second element manager is a core network CN manager, or the second element manager is a RAN manager.

3. The method according to claim 2, wherein when the CN manager manages a plurality of network slice instance subnets, and a CN network slice instance comprises at least two network slice instance subnets, the method further comprises:
sending (300), by the NSM&O, a second configuration request to the RAN manager, wherein the second configuration request is used to associate the at least two network slice instance subnets.

4. The method according to claim 2, wherein the method further comprises:
sending (500), by the NSM&O, a creation request to the RAN manager, wherein the creation request is used to create the RAN network slice instance, and comprises a creation parameter; and
receiving (502) a creation acknowledgment message sent by the RAN manager, wherein the creation acknowledgment message indicates that creation of the RAN network slice instance is completed.

5. The method according to claim 2, wherein the method further comprises:
sending (601), by the NSM&O, a query message to the RAN manager, wherein the query message is used to obtain information about a resource of a network slice instance on a RAN node managed by the RAN manager; and
receiving (603) a resource feedback message from the RAN manager, and generating and sending a resource adjustment message, wherein the resource adjustment message is used to adjust the resource of the network slice instance on the RAN node managed by the RAN manager.

6. A network manager (800), comprising:
a communications interface (820);
a memory (810), configured to store an instruction; and
a processor (830), separately connected to the memory and a transceiver, and configured to execute the instruction stored in the memory, to perform the following steps for associating at least two network slice instance subnets to constitute a to-be-created network slice instance when executing the instruction:
sending a first configuration request to a first element manager through the communications interface, wherein the first configuration request is used to configure a first network slice instance subnet based on a second network slice instance subnet and a requirement of a to-be-created network slice instance, and wherein the configuration request comprises: description information of the second network slice instance subnet, description information of the to-be-created network slice instance, and configuration description information of the first network slice instance subnet;
receiving, through the communications interface, a configuration response message sent by the first element manager, wherein the configuration response message is used to indicate, to the network manager, that the first element manager completes configuration of the first network slice instance subnet;
sending an association request to a second element manager through the communications interface, wherein the association request is used to request the second element manager to associate with the second network slice instance subnet, and wherein the association request comprises the description information of the to-be-created network slice instance; and
receiving, through the communications interface, an association response message sent by the second element manager, wherein the association response message is used to indicate that the association of the second network slice instance subnet is completed and that the second network slice instance subnet can serve the to-be-created network slice instance.

7. The network manager according to claim 6, wherein the network manager is a network slice manager and orchestrator NSM&O, the first element manager is a radio access network RAN manager, the first network slice instance subnet is a RAN slice instance, and the second element manager is a core network CN manager, or the second element manager is a RAN manager.

8. The network manager according to claim 7, wherein the CN manager manages a plurality of network slice instance subnets, and when a CN network slice instance comprises at least two network slice instance subnets, the processor performs the following step when executing the instruction:
sending a second configuration request to the RAN manager through the communications interface, wherein the second configuration request is used to associate the at least two network slice instance subnets.

9. The network manager according to claim 7, wherein the processor further performs the following steps when executing the instruction:
sending a creation request to the RAN manager through the communications interface, wherein the creation request is used to create the RAN network slice instance, and comprises a creation parameter; and
receiving a creation acknowledgment message sent by the RAN manager, wherein the creation acknowledgment message indicates that creation of the RAN network slice instance is completed.

10. The network manager according to claim 7, wherein the processor further performs the following steps when executing the instruction:
sending a query message to the RAN manager through the communications interface, wherein the query message is used to obtain information about a resource of a network slice instance on a RAN node managed by the RAN manager; and
receiving a resource feedback message from the RAN manager to perform resource configuration, and generating and sending a resource adjustment message, wherein the resource adjustment message is used to adjust the resource of the network slice instance on the RAN node managed by the RAN manager.

11. A computer-readable storage medium, wherein the computer-readable storage medium stores an instruction, and when the instruction is run on a computer, the computer performs the method according to claims 1 to 5.

12. A computer program product that comprises an instruction, wherein when the instruction is run on a computer, the computer performs the method according to claims 1 to 5.

## Patentansprüche

1. Verwaltungsverfahren einer Netzwerk-Slice-Instanz zum Verknüpfen mindestens zweier Netzwerk-Slice-Instanz-Subnetze, um eine zu erstellende Netzwerk-Slice-Instanz zu erzeugen, umfassend:
Senden (301) einer ersten Konfigurationsaufforderung an einen ersten Elementverwalter durch einen Netzwerkverwalter, wobei die erste Konfigurationsaufforderung dazu verwendet wird, ein erstes Netzwerk-Slice-Instanz-Subnetz basierend auf einem zweiten Netzwerk-Slice-Subnetz und einer Bedingung einer zu erstellenden Netzwerk-Slice-Instanz zu konfigurieren, und wobei die erste Konfigurationsaufforderung Folgendes umfasst: Beschreibungsinformationen des zweiten Netzwerk-Slice-Instanz-Subnetzes, Beschreibungsinformationen der zu erstellenden Netzwerk-Slice-Instanz und Konfigurationsbeschreibungs-informationen des ersten Netzwerk-Slice-Instanz-Subnetzes;
Empfangen (303) einer Konfigurationsantwortmeldung, die durch den ersten Elementverwalter gesendet wurde, durch den Netzwerkverwalter, wobei die Konfigurationsantwortmeldung dazu verwendet wird, anzuzeigen, dass der erste Elementverwalter eine Konfiguration des ersten Netzwerk-Slice-Instanz-Subnetzes abschließt;
Senden (304) einer Verknüpfungsaufforderung an einen zweiten Elementverwalter durch den Netzwerkverwalter, wobei die Verknüpfungsaufforderung dazu verwendet wird, den zweiten Elementverwalter aufzufordern, sich mit dem zweiten Netzwerk-Slice-Instanz-Subnetz zu verknüpfen, und wobei die Verknüpfungsaufforderung die Beschreibungsinformationen der zu erstellenden Netzwerk-Slice-Instanz umfasst; und
Empfangen (307) einer Verknüpfungsantwortmeldung, die durch den zweiten Elementverwalter gesendet wurde, durch den Netzwerkverwalter, wobei die Verknüpfungsantwortmeldung dazu verwendet wird, anzuzeigen, dass die Verknüpfung des zweiten Netzwerk-Slice-Instanz-Subnetzes abgeschlossen ist und dass das zweite Netzwerk-Slice-Instanz-Subnetz die zu erstellende Netzwerk-Slice-Instanz bedienen kann.

2. Verfahren nach Anspruch 1, wobei der Netzwerkverwalter ein Netzwerk-Slice-Verwalter und -Orchestrator (NSM&O) ist, der erste Elementverwalter ein Funkzugangsnetzwerk-Verwalter (RAN-Verwalter) ist, das erste Netzwerk-Slice-Instanz-Subnetz eine RAN-Slice-Instanz ist, und der zweite Elementverwalter ein KernnetzwerkVerwalter (CN-Verwalter) ist, oder wobei der zweite Elementverwalter ein RAN-Verwalter ist.

3. Verfahren nach Anspruch 2, wobei das Verfahren ferner Folgendes umfasst, wenn der CN-Verwalter eine Vielzahl von Netzwerk-Slice-Instanz-Subnetzen verwaltet und eine CN-Netzwerk-Slice-Instanz mindestens zwei Netzwerk-Slice-Instanz-Subnetze umfasst:
Senden (300) einer zweiten Konfigurationsaufforderung an den RAN-Verwalter durch den NSM&O, wobei die zweite Konfigurationsaufforderung dazu verwendet wird, die mindestens zwei Netzwerk-Slice-Instanz-Subnetze zu verknüpfen.

4. Verfahren nach Anspruch 2, wobei das Verfahren ferner Folgendes umfasst:
Senden (500) einer Erstellungsaufforderung an den RAN-Verwalter durch den NSM&O, wobei die Erstellungsaufforderung dazu verwendet wird, die RAN-Netzwerk-Slice-Instanz zu erstellen, und einen Erstellungsparameter umfasst; und
Empfangen (502) einer Erstellungsbestätigungsmeldung, die durch den RAN-Verwalter gesendet wurde, wobei die Erstellungsbestätigungsmeldung anzeigt, dass die Erstellung der RAN-Netzwerk-Slice-Instanz abgeschlossen ist.

5. Verfahren nach Anspruch 2, wobei das Verfahren ferner Folgendes umfasst:
Senden (601) einer Anfragemeldung an den RAN-Verwalter durch den NSM&O, wobei die Anfragemeldung dazu verwendet wird, Informationen über eine Ressource einer Netzwerk-Slice-Instanz auf einem RAN-Knoten zu erlangen, der durch den RAN-Verwalter verwaltet wird; und
Empfangen (603) einer Ressourcen-Feedback-Meldung von dem RAN-Verwalter, und
Generieren und Senden einer Ressourcenanpassungsmeldung, wobei die Ressourcenanpassungsmeldung dazu verwendet wird, die Ressource der Netzwerk-Slice-Instanz auf dem RAN-Knoten anzupassen, der durch den RAN-Verwalter verwaltet wird.

6. Netzwerkverwalter (800), umfassend:
eine Kommunikationsschnittstelle (820);
einen Speicher (810), der dazu konfiguriert ist, eine Anweisung zu speichern; und
einen Prozessor (830), der separat mit dem Speicher und einem Sendeempfänger verbunden ist, und der dazu konfiguriert ist, die Anweisung auszuführen, die in dem Speicher gespeichert ist, um die folgenden Schritte zum Verknüpfen mindestens zweier Netzwerk-Slice-Instanz-Subnetze durchzuführen, um eine zu erstellende Netzwerk-Slice-Instanz zu erzeugen, wenn die Anweisung ausgeführt wird:
Senden einer ersten Konfigurationsaufforderung an einen ersten Elementverwalter durch die Kommunikationsschnittstelle, wobei die erste Kommunikationsaufforderung dazu verwendet wird, ein erstes Netzwerk-Slice-Instanz-Subnetz basierend auf einem zweiten Netzwerk-Slice-Instanz-Subnetz und einer Bedingung einer zu erstellenden Netzwerk-Slice-Instanz zu konfigurieren, und wobei die Konfigurationsaufforderung Folgendes umfasst:
Beschreibungsinformationen des zweiten Netzwerk-Slice-Instanz-Subnetzes, Beschreibungsinformationen der zu erstellenden Netzwerk-Slice-Instanz und Konfigurationsbeschreibungs-informationen des ersten Netzwerk-Slice-instanz-Subnetzes; Empfangen einer Konfigurationsantwortmeldung, die durch den ersten Elementverwalter gesendet wurde, durch die Kommunikationsschnittstelle, wobei die Konfigurationsantwortmeldung dazu verwendet wird, dem Netzwerkverwalter anzuzeigen, dass der erste Elementverwalter eine Konfiguration des ersten Netzwerk-Slice-Instanz-Subnetzes abschließt;
Senden einer Verknüpfungsaufforderung an einen zweiten Elementverwalter durch die Kommunikationsschnittstelle, wobei die Verknüpfungsaufforderung dazu verwendet wird, den zweiten Elementverwalter anzufragen, sich mit dem zweiten Netzwerk-Slice-Instanz-Subnetz zu verknüpfen, und wobei die Verknüpfungsaufforderung die Beschreibungsinformationen der zu erstellenden Netzwerk-Slice-Instanz umfasst; und
Empfangen einer Verknüpfungsantwortmeldung, die durch den zweiten Elementverwalter gesendet wurde, durch die Kommunikationsschnittstelle, wobei die Verknüpfungsantwortmeldung dazu verwendet wird, anzuzeigen, dass die Verknüpfung des zweiten Netzwerk-Slice-Instanz-Subnetzes abgeschlossen ist und dass das zweite Netzwerk-Slice-Instanz-Subnetz die zu erstellende Netzwerk-Slice-Instanz bedienen kann.

7. Netzwerkverwalter nach Anspruch 6, wobei der Netzwerkverwalter ein Netzwerk-Slice-Verwalter und -Orchestrator (NSM&O) ist, der erste Elementverwalter ein Funkzugangsnetzwerk-Verwalter (RAN-Verwalter) ist, das erste Netzwerk-Slice-Instanz-Subnetz eine RAN-Slice-Instanz ist und der zweite Elementverwalter ein Kernnetzwerkverwalter (CN-Verwalter) ist, oder wobei der zweite Elementverwalter ein RAN-Verwalter ist.

8. Netzwerkverwalter nach Anspruch 7, wobei der Prozessor die folgenden Schritte durchführt, wenn die Anweisung ausgeführt wird, wobei der CN-Verwalter eine Vielzahl von Netzwerk-Slice-Instanz-Subnetzen verwaltet, und wenn eine CN-Netzwerk-Slice-Instanz mindestens zwei Netzwerk-Slice-Instanz-Subnetze umfasst:
Senden einer zweiten Konfigurationsaufforderung an den RAN-Verwalter durch die Kommunikationsschnittstelle, wobei die zweite Konfigurationsaufforderung dazu verwendet wird, die mindestens zwei Netzwerk-Slice-Instanz-Subnetze zu verknüpfen.

9. Netzwerkverwalter nach Anspruch 7, wobei der Prozessor ferner die folgenden Schritte ausführt, wenn die Anweisung ausgeführt wird:
Senden einer Erstellungsaufforderung an den RAN-Verwalter durch die Kommunikationsschnittstelle, wobei die Erstellungsaufforderung dazu verwendet wird, die RAN-Netzwerk-Slice-Instanz zu erstellen, und einen Erstellungsparameter umfasst; und
Empfangen einer Erstellungsbestätigungsmeldung, die durch den RAN-Verwalter gesendet wurde, wobei die Erstellungsbestätigungsmeldung anzeigt, dass die Erstellung der RAN-Netzwerk-Slice-Instanz abgeschlossen ist.

10. Netzwerkverwalter nach Anspruch 7, wobei der Prozessor ferner die folgenden Schritte durchführt, wenn die Anweisung ausgeführt wird:
Senden einer Anfragemeldung an den RAN-Verwalter durch die Kommunikationsschnittstelle,
wobei die Anfragemeldung dazu verwendet wird, Informationen über eine Ressource einer Netzwerk-Slice-Instanz auf einem RAN-Knoten zu erlangen, die durch den RAN-Verwalter verwaltet wird; und
Empfangen einer Ressourcen-Feedback-Meldung von dem RAN-Verwalter, um eine Ressourcenkonfiguration durchzuführen, und Generieren und Senden einer Ressourcenanpassungsmeldung, wobei die Ressourcenanpassungsmeldung dazu verwendet wird, die Ressourcen der Netzwerk-Slice-Instanz auf dem RAN-Knoten anzupassen, der von dem RAN-Verwalter verwaltet wird.

11. Computerlesbares Speichermedium, wobei das computerlesbare Speichermedium eine Anweisung speichert, und wobei der Computer das Verfahren nach Anspruch 1 bis 5 durchführt, wenn die Anweisung auf einem Computer läuft.

12. Computerprogrammprodukt, das eine Anweisung umfasst, wobei der Computer das Verfahren nach Anspruch 1 bis 5 durchführt, wenn die Anweisung auf einem Computer läuft.

## Revendications

1. Procédé de gestion d'instance de tranche de réseau pour associer au moins deux sous-réseaux d'instance de tranche de réseau afin de constituer une instance de tranche de réseau à créer, comprenant :
l'envoi (301), par un gestionnaire de réseau, d'une première demande de configuration à un premier gestionnaire d'élément, dans lequel la première demande de configuration est utilisée pour configurer un premier sous-réseau d'instance de tranche de réseau sur la base d'un second sous-réseau d'instance de tranche de réseau et d'une exigence d'une instance de tranche de réseau à créer, et dans lequel la première demande de configuration comprend : une information de description du second sous-réseau d'instance de tranche de réseau, une information de description de l'instance de tranche de réseau à créer, et une information de description de configuration du premier sous-réseau d'instance de tranche de réseau ;
la réception (303), par le gestionnaire de réseau, d'un message de réponse de configuration envoyé par le premier gestionnaire d'élément, dans lequel le message de réponse de configuration est utilisé pour indiquer, au gestionnaire de réseau, que le premier gestionnaire d'élément achève la configuration du premier sous-réseau d'instance de tranche de réseau ;
l'envoi (304), par le gestionnaire de réseau, d'une demande d'association à un second gestionnaire d'élément, dans lequel la demande d'association est utilisée pour demander au second gestionnaire d'élément de s'associer au second sous-réseau d'instance de tranche de réseau, et dans lequel la demande d'association comprend l'information de description de l'instance de tranche de réseau à créer ; et
la réception (307), par le gestionnaire de réseau, d'un message de réponse d'association envoyé par le second gestionnaire d'élément, dans lequel le message de réponse d'association est utilisé pour indiquer que l'association du second sous-réseau d'instance de tranche de réseau est achevée et que le second sous-réseau d'instance de tranche de réseau peut desservir l'instance de tranche de réseau à créer.

2. Procédé selon la revendication 1, dans lequel le gestionnaire de réseau est un gestionnaire de tranche de réseau et un orchestrateur NSM&O, le premier gestionnaire d'élément est un gestionnaire de réseau d'accès radio RAN, le premier sous-réseau d'instance de tranche de réseau est une instance de tranche RAN, et le second gestionnaire d'élément est un gestionnaire de réseau cœur CN, ou le second gestionnaire d'élément est un gestionnaire RAN.

3. Procédé selon la revendication 2, dans lequel lorsque le gestionnaire CN gère une pluralité de sous-réseaux d'instance de tranche de réseau, et qu'une instance de tranche de réseau CN comprend au moins deux sous-réseaux d'instance de tranche de réseau, le procédé comprend en outre :
l'envoi (300), par le NSM&O, d'une seconde demande de configuration au gestionnaire RAN, dans lequel la seconde demande de configuration est utilisée pour associer les au moins deux sous-réseaux d'instance de tranche de réseau.

4. Procédé selon la revendication 2, dans lequel le procédé comprend en outre :
l'envoi (500), par le NSM&O, d'une demande de création au gestionnaire RAN, dans lequel la demande de création est utilisée pour créer l'instance de tranche de réseau RAN, et comprend un paramètre de création ; et
la réception (502) d'un message d'accusé de réception de création envoyé par le gestionnaire RAN, dans lequel le message d'accusé de réception de création indique que la création de l'instance de tranche de réseau RAN est achevée.

5. Procédé selon la revendication 2, dans lequel le procédé comprend en outre :
l'envoi (601), par le NSM&O, d'un message de requête au gestionnaire RAN, dans lequel le message de requête est utilisé pour obtenir une information concernant une ressource d'une instance de tranche de réseau sur un nœud RAN géré par le gestionnaire RAN ; et
la réception (603) d'un message de rétroaction de ressource en provenance du gestionnaire RAN, et la génération et l'envoi d'un message d'ajustement de ressource, dans lequel le message d'ajustement de ressource est utilisé pour ajuster la ressource de l'instance de tranche de réseau sur le nœud RAN géré par le gestionnaire RAN.

6. Gestionnaire de réseau (800), comprenant :
une interface de communications (820) ;
une mémoire (810), configurée pour stocker une instruction ; et
un processeur (830), connecté séparément à la mémoire et à un émetteur-récepteur, et configuré pour exécuter l'instruction stockée dans la mémoire, pour effectuer les étapes suivantes pour associer au moins deux sous-réseaux d'instance de tranche de réseau afin de constituer une instance de tranche de réseau à créer lors de l'exécution de l'instruction :
l'envoi d'une première demande de configuration à un premier gestionnaire d'élément par l'intermédiaire de l'interface de communications, dans lequel la première demande de configuration est utilisée pour configurer un premier sous-réseau d'instance de tranche de réseau sur la base d'un second sous-réseau d'instance de tranche de réseau et d'une exigence d'une instance de tranche de réseau à créer, et dans lequel la demande de configuration comprend : une information de description du second sous-réseau d'instance de tranche de réseau, une information de description de l'instance de tranche de réseau à créer, et une information de description de configuration du premier sous-réseau d'instance de tranche de réseau ;
la réception, par l'intermédiaire de l'interface de communications, d'un message de réponse de configuration envoyé par le premier gestionnaire d'élément, dans lequel le message de réponse de configuration est utilisé pour indiquer, au gestionnaire de réseau, que le premier gestionnaire d'élément achève la configuration du premier sous-réseau d'instance de tranche de réseau ;
l'envoi d'une demande d'association à un second gestionnaire d'élément par l'intermédiaire de l'interface de communications, dans lequel la demande d'association est utilisée pour demander au second gestionnaire d'élément de s'associer au second sous-réseau d'instance de tranche de réseau, et dans lequel la demande d'association comprend l'information de description de l'instance de tranche de réseau à créer ; et
la réception, par l'intermédiaire de l'interface de communications, d'un message de réponse d'association envoyé par le second gestionnaire d'élément, dans lequel le message de réponse d'association est utilisé pour indiquer que l'association du second sous-réseau d'instance de tranche de réseau est achevée et que le second sous-réseau d'instance de tranche de réseau peut desservir l'instance de tranche de réseau à créer.

7. Gestionnaire de réseau selon la revendication 6, dans lequel le gestionnaire de réseau est un gestionnaire de tranche de réseau et un orchestrateur NSM&O, le premier gestionnaire d'élément est un gestionnaire de réseau d'accès radio RAN, le premier sous-réseau d'instance de tranche de réseau est une instance de tranche RAN, et le second gestionnaire d'élément est un gestionnaire de réseau cœur CN, ou le second gestionnaire d'élément est un gestionnaire RAN.

8. Gestionnaire de réseau selon la revendication 7, dans lequel le gestionnaire CN gère une pluralité de sous-réseaux d'instance de tranche de réseau, et lorsqu'une instance de tranche de réseau CN comprend au moins deux sous-réseaux d'instance de tranche de réseau, le processeur effectue l'étape suivante lors de l'exécution de l'instruction :
l'envoi d'une seconde demande de configuration au gestionnaire RAN par l'intermédiaire de l'interface de communications, dans lequel la seconde demande de configuration est utilisée pour associer les au moins deux sous-réseaux d'instance de tranche de réseau.

9. Gestionnaire de réseau selon la revendication 7, dans lequel le processeur effectue en outre les étapes suivantes lors de l'exécution de l'instruction :
l'envoi d'une demande de création au gestionnaire RAN par l'intermédiaire de l'interface de communications, dans lequel la demande de création est utilisée pour créer l'instance de tranche de réseau RAN, et comprend un paramètre de création ; et
la réception d'un message d'accusé de réception de création envoyé par le gestionnaire RAN, dans lequel le message d'accusé de réception de création indique que la création de l'instance de tranche de réseau RAN est achevée.

10. Gestionnaire de réseau selon la revendication 7, dans lequel le processeur effectue en outre les étapes suivantes lors de l'exécution de l'instruction :
l'envoi d'un message de requête au gestionnaire RAN par l'intermédiaire de l'interface de communications, dans lequel le message de requête est utilisé pour obtenir une information concernant une ressource d'une instance de tranche de réseau sur un nœud RAN géré par le gestionnaire RAN ; et
la réception d'un message de rétroaction de ressource en provenance du gestionnaire RAN pour effectuer une configuration de ressource, et la génération et l'envoi d'un message d'ajustement de ressource, dans lequel le message d'ajustement de ressource est utilisé pour ajuster la ressource de l'instance de tranche de réseau sur le nœud RAN géré par le gestionnaire RAN.

11. Support de stockage lisible par ordinateur, dans lequel le support de stockage lisible par ordinateur stocke une instruction, et lorsque l'instruction est exécutée sur un ordinateur, l'ordinateur effectue le procédé selon les revendications 1 à 5.

12. Produit de programme informatique qui comprend une instruction, dans lequel lorsque l'instruction est exécutée sur un ordinateur, l'ordinateur effectue le procédé selon les revendications 1 à 5.
